# EUROPEAN PATENT APPLICATION

(11) **EP 4 016 810 A1**
(43) Date of publication of application: **22.06.2022**
(21) Application number: 21195250.2
(22) Date of filing: 07.09.2021
(51) Int. Cl.: H02K 7/18, H02K 7/06, H02K 7/07, F03G 7/08

(54) **INSTALLATION FOR POWER GENERATION BY MEANS OF VEHICULAR TRAFFIC**

(30) Priority: 17.12.2020 AR P200103511
(71) Applicant: Derbartanian, Juan Carlos, Buenos Aires (AR)
(72) Inventor: Derbartanian, Juan Carlos, Buenos Aires (AR)
(74) Representative: Curell Suñol S.L.P.

(57) **Abstract**

Installation for power generation by means of vehicular traffic that can be located at floor level (2) of a vehicles traffic lane, wherein it has generator of electrical energy (5) modules, each of which includes: a set of mobile crossbar components (20) mounted over both sets (21a) of hydraulic cylinders (21), an hydraulic circuit (3), a linear hydraulic actuator (32), movement transformer mechanism (4) from straight swinging movement into a one-way rotating movement, and a generator (5) of electrical energy; each crossbar component (20) is moved by the own weight of the vehicles (7) crossing it, propelling a set of hydraulic cylinders (21) that, through the hydraulic circuit (3), are connected to the linear hydraulic actuator (32); this last one, through the movement transformer mechanism (4), propels the rotating movement of the electrical generator (5). When the wheel (70) of a vehicle (7) steps a mobile crossbar component (20), this last one moves downwards, so it propels the mobile arms (22) of the hydraulic cylinders (21). Once the descending cycle ends, the automatic repositioning of the crossbar component (20) takes places as a result of the floor elastic means (23).

## Description

### Field of the invention:

The present invention refers to the field of the utilization of wasted mechanical energy and its conversion into electrical energy.

In particular, it consists of an installation for the generation of energy by means of the vehicular traffic that makes it possible to use vehicle traffic and/or bus stops of transport vehicles that, by their very transit and weight, allow the generation of electrical energy through a floor consisting of mobile crossbars that act over cylinders alignments, hydraulic actuators and mechanisms that propels the electrical energy generators.

### Prior art:

Devices that, in order to take advantage of vehicular traffic, are made of hydraulic apparatus equipped with unidirectional flow control valves used to direct the smooth flow in a circuit, are already known. This circuit is formed by a hydraulic engine, a compressible chamber and rectifier media necessary to maintain a constant flow of the system.

Systems based on the placement of rotary cylindrical rollers transversally arranged on the road through which vehicles transit are also known. This way, said rollers are propelled by the vehicles and their movement is transmitted to electricity generation means.

Other known devices use the passage of vehicles to drive over the stator and rotor type generators. The actuation takes place through means such as a threaded spindle, externally mechanized to axially alternate through a piece that rotates in the inner part of the rotor. The alternative movements of the spindle, and therefore the rotations of the rotor, are propelled by the circulating vehicles. Devices based on gear mechanisms that, on the one hand, are related to a generator, and on the other hand, are coupled to a vertical beam, are also known. In this case, the passage of vehicles is used to move said gear mechanism.

### Advantages and Purposes:

A purpose of the present invention is to benefit from part of the energy generated by the circulation of land transport vehicles that is usually wasted.

One advantage of the present installation is that it can be used both as a floor of circulation platform, and also as station floor of the dock or stop for the ascent and descent of passengers.

In both cases, the circulation and own weight of the vehicles moves some crossbar components of the floor that are sunken until driving to some hydraulic cylinder alignments. These last ones, through the ducts of a circuit, propel some hydraulic actuators that, through mechanisms that transform the movements move both electrical generators.

Further to the generation of electrical energy, in the case of transport stations or stops, this installation has the great advantage that its floors, formed by a plurality of mobile crossbar components, decreases the braking amount or intensity of the vehicles. Therefore, great mechanical, economical resources are saved, and specially, the prejudicial urban smog of suspended particles PM10 and PM2.5, that are originated by the braking of said vehicles is avoided. It is worth mentioning that this smog is greater in the case of oversize vehicles, suchas, urban buses.

Another advantage of the extended application of this installation would be a huge saving in the laying of thousands of kilometers of electrical lines, towers, equipment, cables and the consequential cost in the transport of electrical energy that is usually transported through great distances from the areas where it is generated. Therefore, an ecological, domestic, self-sustainable and of greatmagnitude generation of energy will be achieved.

In short, the advantages mentioned are translated, among others, in a triple benefit: energetic, of public health and economical.

Another advantage of the present installation is that it is modular, since it is based on modules integrated through mobile crossbars, sets of hydraulic cylinders, ducts, actuators and mechanisms transforming the movement that, propelled by the passage of vehicles, move the electrical generators. This is therefore a system that, through the incorporation or elimination of modules, can be expanded or reduced according to the possibilities or needs of the installation site.

### Drawings:

For better clarity and understanding of the object of the invention, it is illustrated with several figures where it has been represented in one of its preferred embodiments, everything as an illustrative example, without limitation:

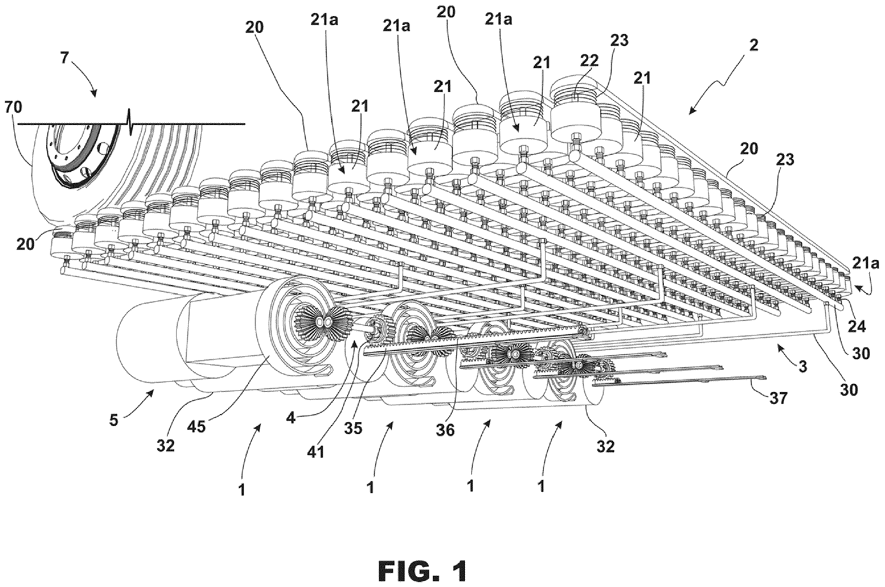

Figure 1 is bottom perspective view of the present installation, in an embodiment wherein it is formed by four generator modules. Under these mobile crossbar components, that form the floor for vehicles, the hydraulic components, mechanisms and generators corresponding to each generatormodule can be observed.

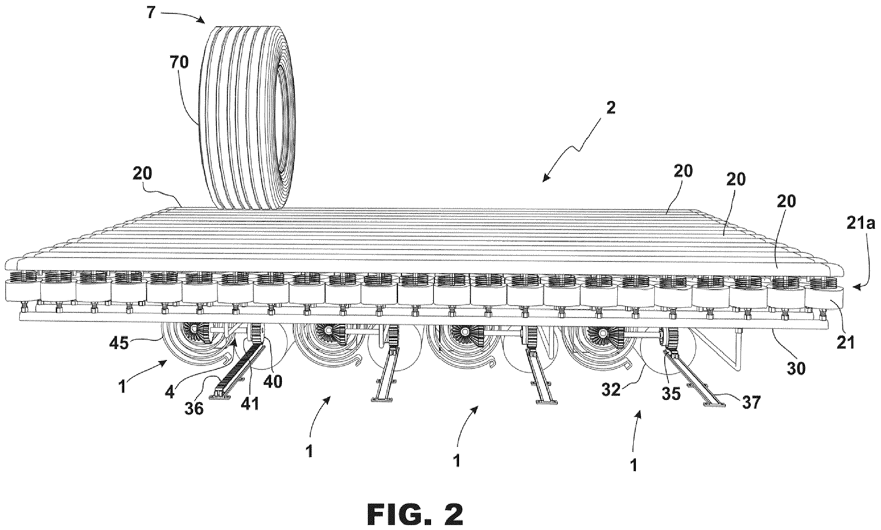

Figure 2 is a front perspective view of the installation of Figure 1. Under the front mobile crossbar component, its respective aligned set of hydraulic cylinders can be observed, as well as the elastic means of the floor.

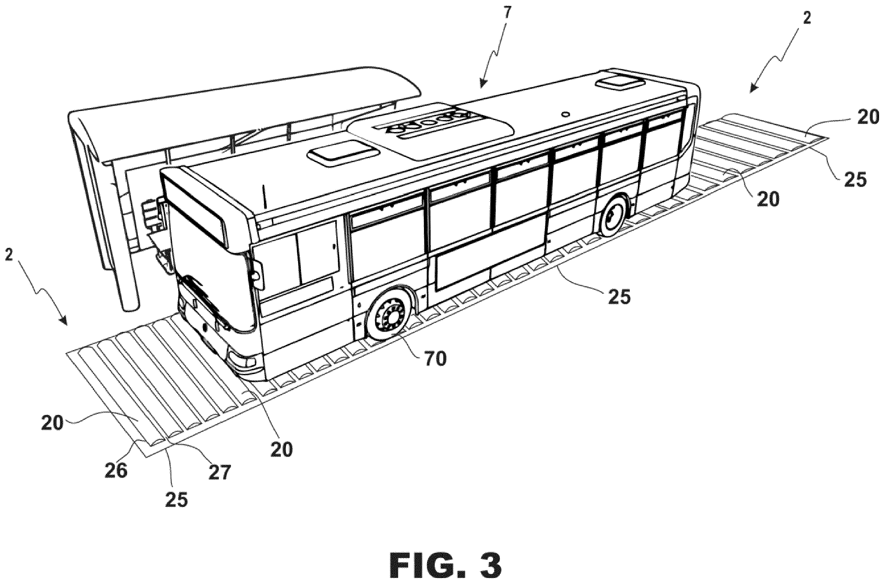

Figure 3 is an upper perspective view of the present installation placed in front of a passengers stop. Over the installation, the circulation of a passenger vehicle can be observed.

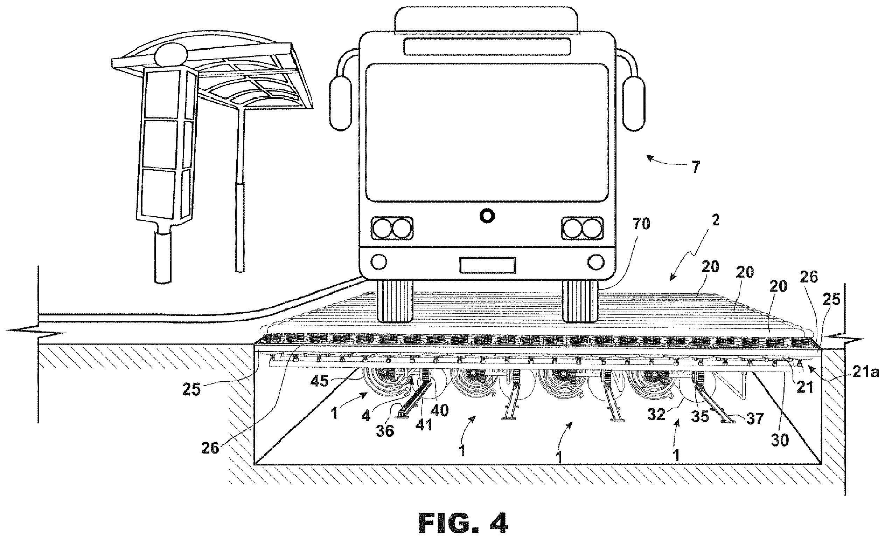

Figure 4 is a front perspective view of the installation, arranged in front of a passengers stop and above which a passenger vehicle circulates. The composed floor includes a fixed component structure.

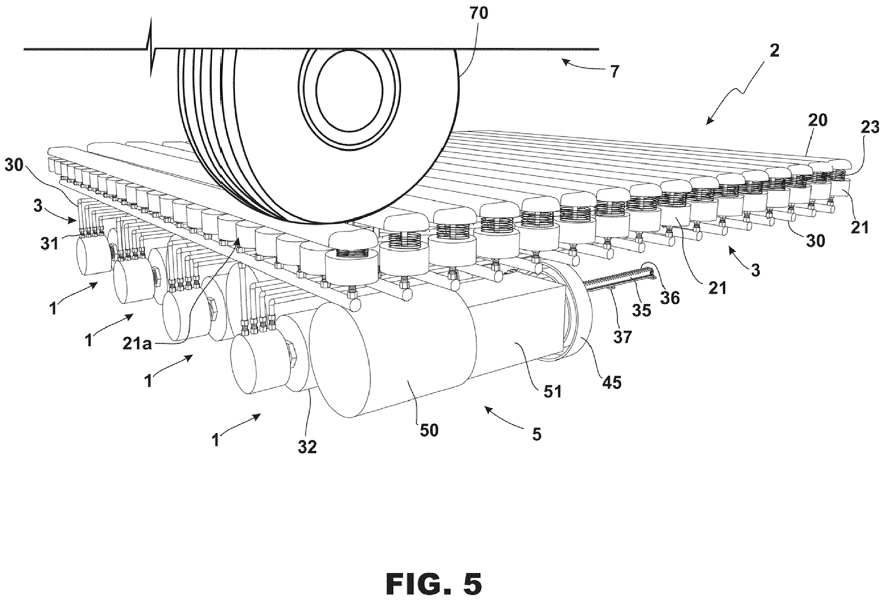

Figure 5 is an upper perspective view of the installation of Figure 1, where it can be appreciated how a wheel applies the weight of a vehicle to the actuation of the first mobile crossbar component that appears descended, and thus activating the respective hydraulic cylinders.

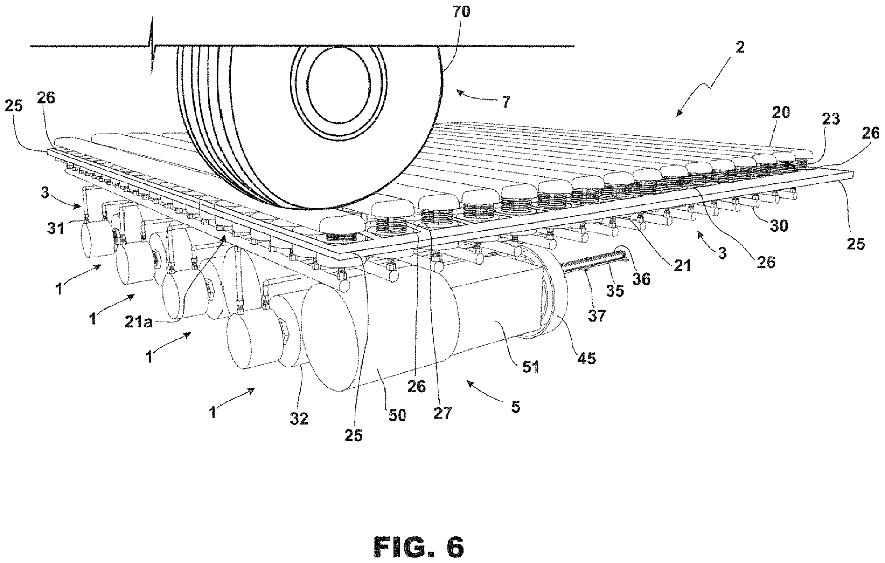

Figure 6 is an upper perspective view of the installation, as the one of Figure 5. In this case, the compound floor includes a fixed component structure, through which crossed passages, the mobile crossbar components move.

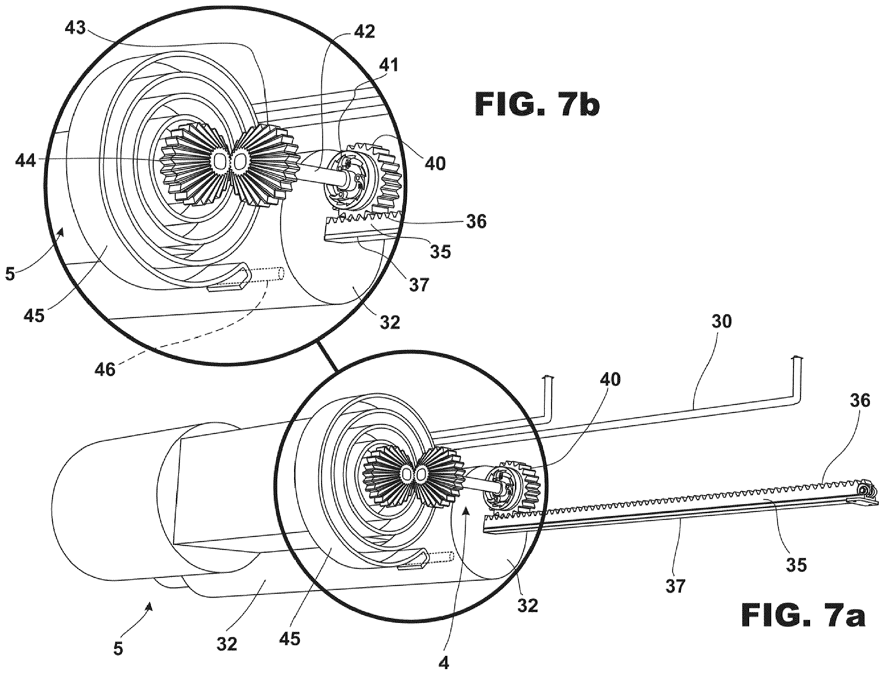

Figure 7a is a perspective view of the movement transformer mechanism and its link, on the one hand, with the linear gear of the swinging impeller arm and, on the other hand, with the generator of electrical energy.
Figure 7b is a detail of the perspective view of Figure 7a. The different component of the movement transformer mechanism can be appreciated, as well as the ratchet and spring motor mechanisms.

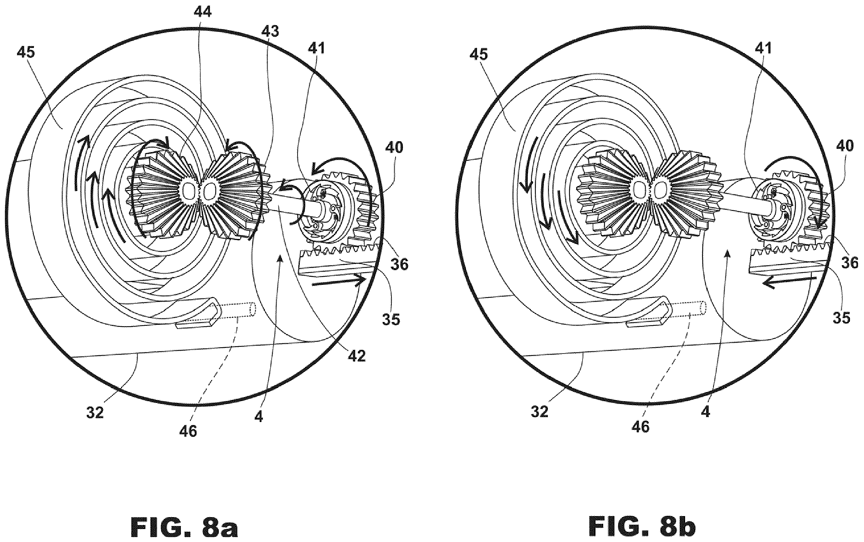

Figure 8a is a perspective detail as the one of Figure 7b, wherein, through arrows, the movements of the powertrain formed by the linear gear, the ratchet mechanism, the movement transformer mechanism and the spring motor mechanism are shown. In this case, the movements corresponding to the active cycle are shown, where said movements are propelled by the emerging movement of the swinging impeller arm.
Figure 8b is a perspective detail as in Figure 7b, wherein through arrows, the movements of the cinematic chain are shown. In this case, the movements corresponding to the passive or reactive cycle are shown. During this cycle, the spring motor downloads the accumulated energy propelling the electrical generator while the swinging impeller arm moves back and the ratchet mechanisms disengages the cogwheel driven by the movement transformer mechanism.

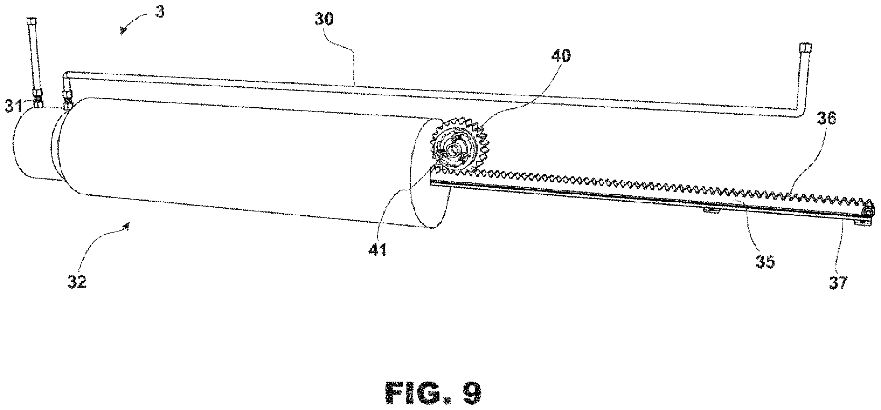

Figure 9 is a perspective view of the hydraulic actuator, wherein the two connections with the hydraulic circuit ducts can be observed and the impeller arm can also be observed. As regards the latter, both the linear gear and the slide rail can be observed.

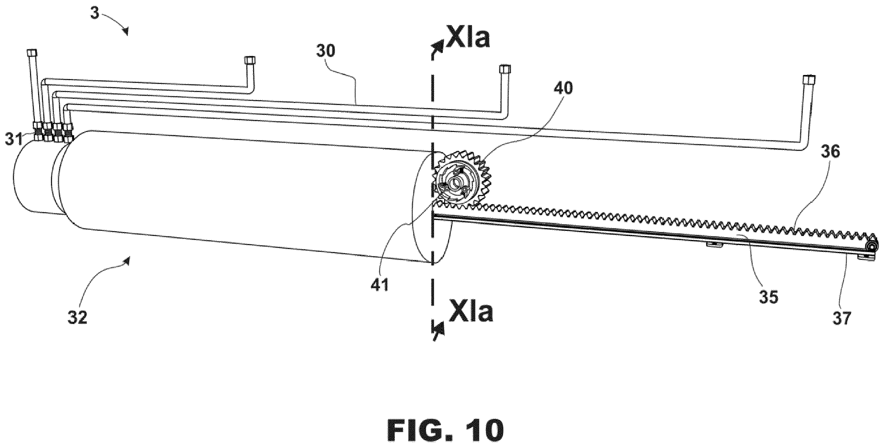

Figure 10 is a perspective view of the hydraulic actuator, in another embodiment, wherein many connections are arranged for both ducts of the hydraulic circuit.

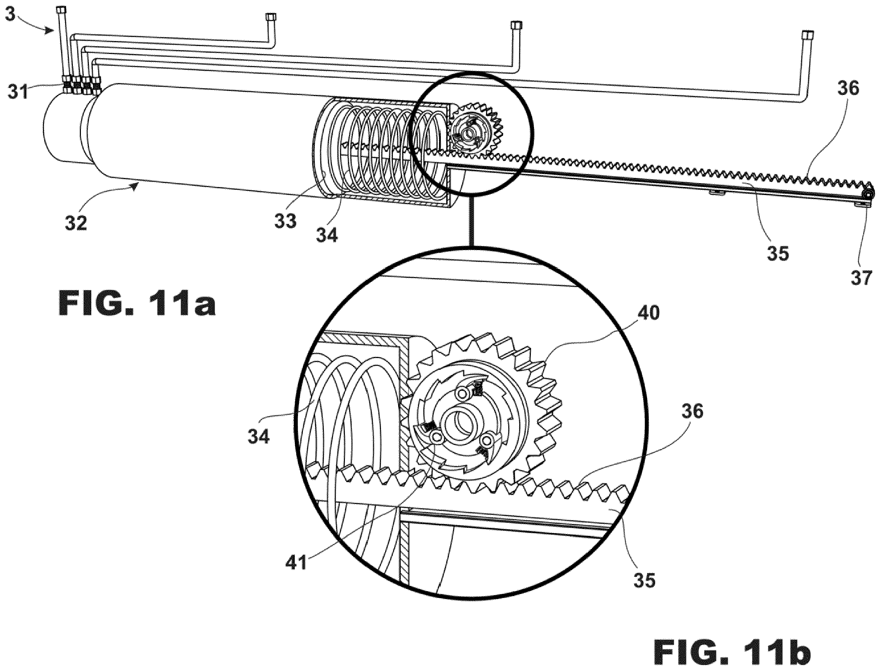

Figure 11a is a partial longitudinal cut of the hydraulic actuator, according to a cutting plane that is stated as Xla-Xla in Figure 10. This cut allows observing the impeller piston and the impeller arm, as well as the return elastic acting oversaid piston.
Figure 11b is a detail of the cut of Figure 7a, wherein both the link between the linear gear and the driven cogwheel can be seen, as well as the elements ofthe ratchet mechanism.

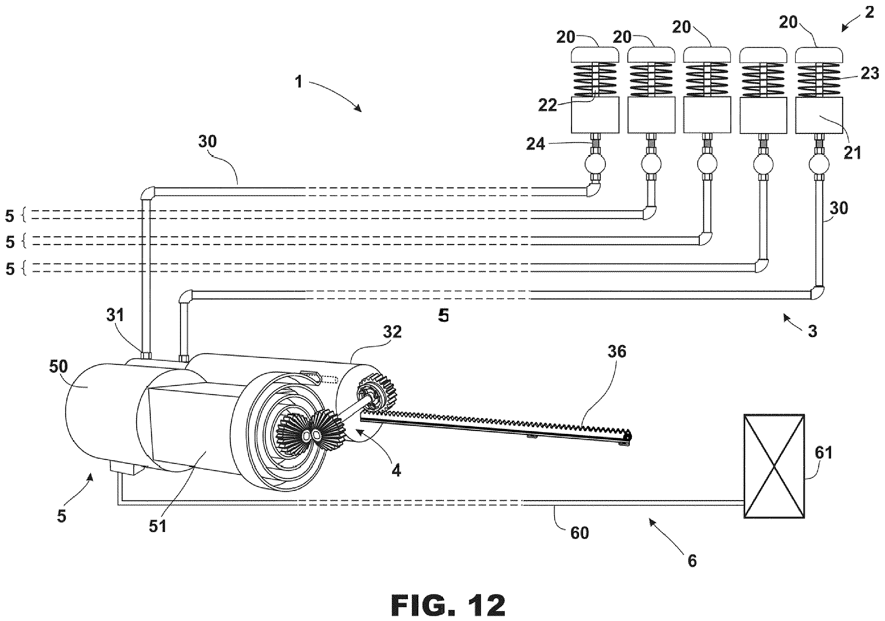

Figure 12 is a schematic representation of one of the generator modules wherein the main component parts can be distinguished.
Figure 13 is a schematic representation wherein an embodiment of the hydraulic circuit is shown. In this case, the following arrangement can be observed:
   - The first and fifth crossbar components, through the first and fifth hydraulic ducts, are connected with the first hydraulic actuator;
   - The second and sixth crossbar components, through the second and sixth hydraulic ducts, are connected with the second hydraulic actuator;
   - The third and seventh crossbar components, through the third and seventh hydraulic ducts, are connected with the third hydraulic actuator; and
   - The fourth and eighth crossbar components, through the fourth and eighth hydraulic ducts, are connected with the fourth hydraulic actuator.

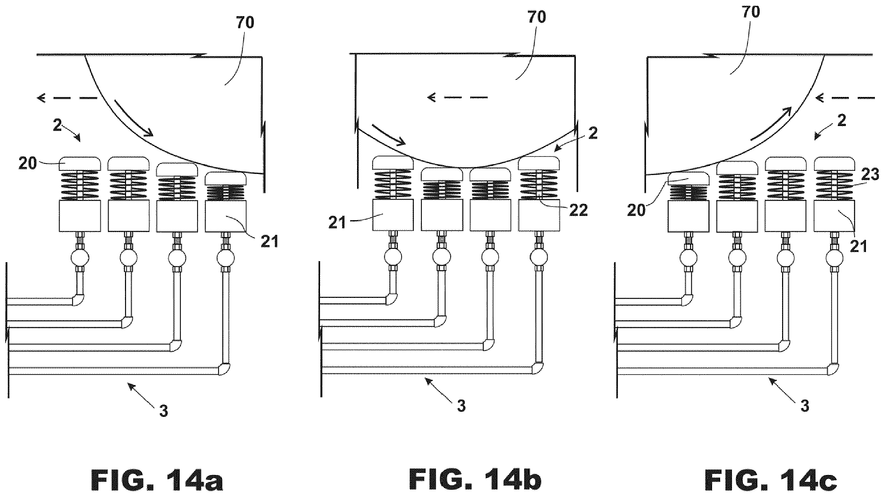

Figures 14a, 14b and 14c are both partial side views that, as a whole, show a step sequence of a wheel of a vehicle, though the mobile crossbar components. It can be observed how, as they are stepped by the wheel, the mobile crossbar components decrease. This way, the asynchronous actuation of the respective sets of hydraulic cylinders is produced. The dotted lines arrows show the movement direction (not illustrated), while the curved arrows show the direction of rotation of the wheel of said vehicle.

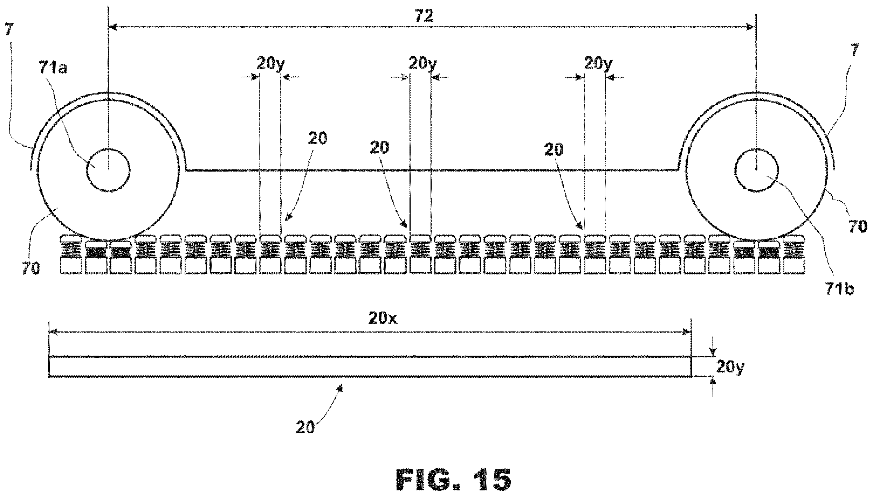

Figure 15 is a schematic representation that shows the interposition of several mobile crossbar components in the presence of the wheels of a vehicle, which contributes to

In the different figures, the same numbers and /or reference letters indicate equal or corresponding parts.

**List of the main references:**

| | |
|---|---|
| (1) | Generator Module |
| (2) | Compound floor |
| (20) | Mobile crossbar component |
| (20a) | First mobile crossbar component [in Fig. 13]. |
| (20b) | Second mobile crossbar component [in Fig. 13]. |
| (20c) | Third mobile crossbar component [in Fig. 13]. |
| (20d) | Fourth mobile crossbar component [in Fig. 13]. |
| (20e) | Fifth mobile crossbar component [in Fig. 13]. |
| (20f) | Sixth mobile crossbar component [in Fig. 13]. |
| (20g) | Seventh mobile crossbar component I [in Fig. 13]. |
| (20h) | Eighth mobile crossbar component [in Fig. 13]. |
| (20x) | Cross length of the components (20). |
| (20y) | Width of the components (20). |
| (21) | Hydraulic cylinders. |
| (21a) | Set or alignment of hydraulic cylinders (21). |
| (22) | Mobile arms. |
| (23) | Floor elastic means. |
| (24) | First hydraulic connections. |
| (25) | Fixed component structure. |
| | |
| (26) | Cross passages [whereby mobile crossbar components move (20)]. |
| (27) | Fixed crossbars. |
| (3) | Hydraulic circuit. |
| (30) | Hydraulic ducts. |
| (30a) | First hydraulic duct [in Fig. 13]. |
| (30b) | Second hydraulic duct [in Fig. 13]. |
| (30c) | Third hydraulic duct [in Fig. 13]. |
| (30d) | Fourth hydraulic duct [in Fig. 13]. |
| (30e) | Fifth hydraulic duct [in Fig. 13]. |
| (30f) | Sixth hydraulic duct [in Fig. 13]. |
| (30g) | Seventh hydraulic duct [in Fig. 13]. |
| (30h) | Eighth hydraulic duct [in Fig. 13]. |
| (31) | Second hydraulic connections. |
| (32) | Hydraulic actuator. |
| (32a) | First hydraulic actuator [in Fig. 13]. |
| (32b) | Second hydraulic actuator [in Fig. 13]. |
| (32c) | Third hydraulic actuator [in Fig. 13]. |
| (32d) | Fourth hydraulic actuator [in Fig. 13]. |
| (33) | Impeller piston |
| (34) | Return elastic |
| (35) | Swinging impeller arm |
| (36) | Linear gear |
| (37) | Slide rail |
| (4) | Movement transformer mechanism. |
| (40) | Driven cogwheel |
| (41) | Ratchet mechanism |
| (42) | Drive shaft |
| (43) | Driver pinion. |
| | |
| (44) | Driven pinion. |
| (45) | Spring motor mechanism. |
| (46) | Spring motor anchoraje. |
| (5) | Generator of electrical energy. |
| (50) | Stator. |
| (51) | Reducer. |
| (6) | Service circuit [of the generated electrical energy]. |
| (60) | Service line. |
| (61) | Service Board. |
| (7) | Vehicle. |
| (70) | Vehicle Wheel. |
| (71a) | Front axle of the vehicle (7). |
| (71b) | Rear axle of the vehicle (7). |

### Description

In general terms, the present invention refers to an installation for the generation of energy through vehicular traffic, that can be located at floor level (2) of a vehicles traffic lane, wherein it has generator of electrical energy (5) modules, each of which includes: a set of mobile crossbar components (20) mounted over both sets (21a) of hydraulic cylinders (21), an hydraulic circuit (3), a linear hydraulic actuator (32), movement transformer mechanism (4) from straight swinging movement into a one-way rotating movement, and a generator (5) of electrical energy; each crossbar component (20) is moved by the own weight of the vehicles (7) crossing it, propelling a set of hydraulic cylinders (21) that, through the hydraulic circuit (3), are connected to the linear hydraulic actuator (32); this last one, through the movement transformer mechanism (4), propels the rotating movement of the electrical generator (5).

The following is a description of some of the main embodiments.

### Detailed description:

The present installation is located at floor level of a vehicles (7) traffic lane, in order to be actuated by the wheels (70) through which the action of the weight of the vehicles (7) crossing it is applied.

This is a modular-type installation since, as of at least one generator module (1), as many modules (1) as required can be arranged according to the amount of electrical energy desired.

Each generator module (1) includes, at least: a set of mobile crossbar components (20) mounted over both sets (21a) of hydraulic cylinders (21), an hydraulic circuit (3), a linear hydraulic actuator (32), a movement transformer mechanism (4) from straight swinging movement into a one-way rotating movement, and a generator (5) of electrical energy.

In particular, the mobile crossbar components (20) are long-shaped and narrow structural elements arranged in such a manner that they cross the vehicles (7) traffic lane. They are placed abuttingly side by side, in a way that as a whole they form the compound floor (2) of the installation. Each of these crossbar components (20) are reversible movable from their usually emerging position, until a descending or sunken position, from which they resume due to the action of a plurality of floor elastic means (23) that are elastically yielding. The elastic means (23) are arranged throughout each crossbar component (20) and are the ones conducting the automatic repositioning of these last ones.

Each mobile crossbar component (20) is mounted over a respective set (21a) of hydraulic cylinders (21) that are propelled when descending. In said set (21a) the hydraulic cylinders (12) can form an alignment that is arranged throughout the respective crossbar component (20).

The hydraulic cylinders (21) are connected to the lineal hydraulic actuators (32) through a hydraulic circuit (3) of oleo-hydraulic fluid.

In one embodiment, all the hydraulic cylinders (21) of one same alignment or set (21a) - corresponding to the same crossbar component (20) - have the first connections (24) connected to a same hydraulic duct (30). On the one hand, all the hydraulic ducts (30) of the same module (1) are connected to the second connections (31) of a same linear hydraulic actuator (32).

On the other hand, the compound floor (2) is installed in a manner that the mobile crossbar components (20) of a same module (1) -which respective sets (21a) of hydraulic cylinders (21) are connected (24) to a same linear hydraulic actuator (32)- have an asynchronous operation. This is achieved arranging the crossbar components (20) of each module (1) separated and placing one after another, in such a manner that their actuation by the wheels (70) of the vehicles (7) is asynchronous or not simultaneous. Therefore, the actuations of one same linear hydraulic actuator (32) are produced in different moments and in different active cycles of the linear gear (36) of rack, in such a way that each set or alignment (21a) of hydraulic cylinders (21) act after completing the passive cycle of the respective linear hydraulic actuator (32).

Each linear hydraulic actuator (32) includes Swinging impeller arm (35) with a linear gear (36) of rack, that is externally projected regarding the body of the hydraulic actuator (32)

Each linear hydraulic actuator (32) includes a swinging impeller arm (35) with a linear gear (36) of rack, that is outwardly projected regarding the body of the hydraulic actuator (32). Said impeller arm (35) works with a swinging movement over a slide rail (37) that maintains it correctly placed. Inwardly, the mentioned swinging impeller arm (35) is linked to am impeller piston (33) that moves with an active cycle and a passive cycle. In the active cycle, the mentioned impeller piston (33) acts under the influence of the hydraulic cylinders (21), while in the passive cycle it acts under the influence of a return elastic (34) that is loaded in the active cycle.

The mentioned linear gear (36) engages with a movement transformer mechanism (4) that includes a driven cogwheel (40), wherein the straight movement of the linear gear (36) is transformed in a rotation movement of said driven cogwheel (40). This intermittent rotation movement is in one sense, due to the presence of a first ratchet mechanism (41) linked to a drive shaft (42).

The mentioned drive shaft (42) is mounted over a gear system that, in this case, deviates the transmission through a driver pinion (43) that acts over a driven pinion (44). This last one propels a spring motor mechanism (45) that, on the one hand, accumulates the mechanical energy transmitted by said transformer mechanism (4) while, on the other hand, releases said energy. Both the accumulation cycle and the releasing cycle of said spring motor (45) this device propels the electrical generator (5).

On the different modules (1), the generators (5) of electrical energy may be alternators that work in both directions of rotation.

For their part, the mentioned generators of electrical energy (5) are connected to a service circuit (6) wherein, through one or more electrical service lines (60), provide the generated electrical energy to one or more service boards (61). The corresponding connection means that are necessary for the load networks or circuits that need to be powered, can be arranged therein.

The possibility that the compound floor (2) includes a fix and open component structure (25) has been foreseen. It is a structure that can be mounted at superficial level of the street and fixed to the existing structures in the installation place. This structure (2) is crossed by a plurality of cross passages (26) whereby the ascending and descending movements of the mobile crossbar components (20) are produced when they are stepped by the wheels (70) of the circulating vehicles (7).

The mentioned cross passages (26) are separated with each other due to the presence of crossbars (27) that delimit them and that form the fix part of the mentioned compound floor (2).

On the other hand, it has been foreseen that this installation may form part of an ascent and descent passenger station for transport vehicles (7). In this case, the width (20y) of the mobile crossbar components (20) shall be such that a plurality of said mobile crossbar components (20) can be fitted between the front axle and the rear axle of said vehicles (7). Therefore, these last ones (20) are brought one after the other before the wheels (70) of said vehicles (7), contributing to the braking at said station.

### Operation:

When the wheel (70) of a vehicle (7) steps a mobile crossbar component (20), this last one moves downwards, so it propels the mobile arms (22) of the hydraulic cylinders (21). Once the descending cycle ends, the automatic repositioning of the crossbar component (20) takes places as a result of the floor elastic means (23).

Each set (21a) of hydraulic cylinders (21) transmits its pressure through the common hydraulic duct (30) that, through the second hydraulic connections (31) actuates the impeller piston (33) of the hydraulic actuator (32).

Together with the mentioned impeller piston (33), the swinging impeller arm (35) that emerges from the hydraulic actuator (32) moves, and therefore its linear gear (36) of rack rotates the driven cogwheel (40). In this manner, the active cycle of the movement transformer mechanism (4) takes place, wherein the straight swinging movement is transformed into a rotation movement.

The ratchet mechanism (41) operates in a way that, during the mentioned active cycle, it engages the driven cogwheel (40) with the drive shaft (42). This last one, at the same time, propels the driver pinion (43) that moves the driven pinion (44), which discharge propels the electrical generator (5).

Furthermore, during the passive or active cycle of the movement transformer mechanism (4), the ratchet mechanism (41) disengages and the swinging impeller arm (35) returns, due to the effect that the return elastic (34) has over the impeller piston (33).

On the other hand, the mobile crossbar components (20), which respective sets (21a) of hydraulic cylinders (21) are connected to the same linear hydraulic actuator (32), are arranged separated between with each other in such a way their operation is asynchronous and is produced in active cycles different from the linear gear (36) of rack corresponding to said actuator (32). These mobile crossbar components (20) are arranged interleaved with other mobile crossbar components (20) connected to other linear hydraulic actuators (32), in such a manner that the operation of all the mobile crossbar components (20) is asynchronous and that each set (21a) of hydraulic cylinders (21) act after the passive cycle of the respective linear hydraulic actuator (32). For example, a mobile crossbar component (20) corresponding to a first linear hydraulic actuator (32) may be arranged following four crossbar components (20) corresponding to said other actuators (32) and after another crossbar component (20) that also corresponds to said first actuator (32).

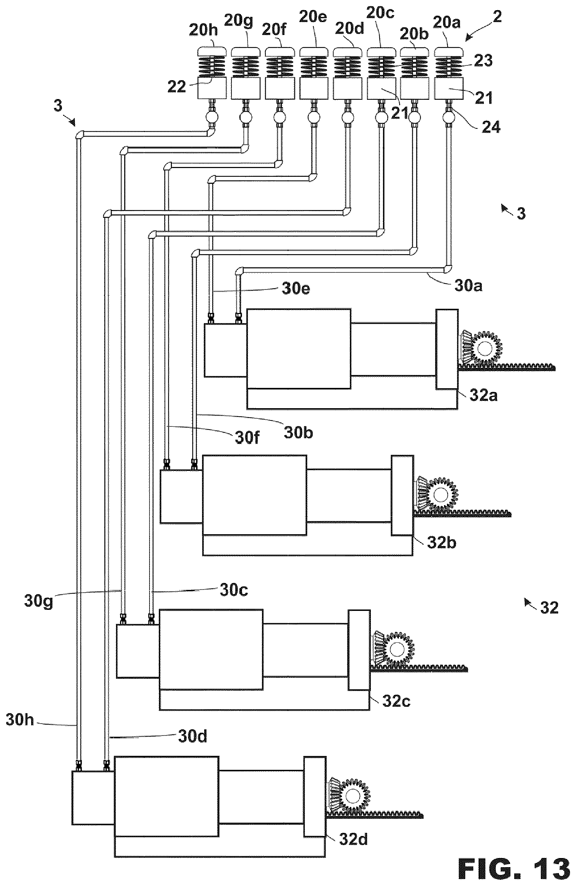

For example, Figure 13 shows an embodiment wherein the following can be observed:
- The first (20a) and fifth (20e) crossbar components (that are separated by the interposition of the second (20b), third (20c) and fourth (20d) components) are connected to the first hydraulic actuator (32a), through the first (30a) andfifth (30e) hydraulic ducts;
- The second (20b) and sixth (20f) crossbar components (that are separated by the interposition of the third (20c), fourth (20d) and fifth (20e) components) are connected to the second hydraulic actuator (32b), through the second (30b) and sixth (30f) hydraulic ducts;
- The third (20c) and seventh (20g) crossbar components (that are separated by the interposition of the fourth (20d), fifth (20e) and sixth (f) components) are connected to the third hydraulic actuator (32c), through the third (30c) and seventh (30g) hydraulic ducts; and
- The fourth (20d) and eighth (20h) crossbar components (that are separated by the interposition of the fifth (20e), sixth (20f) and seventh (20g) components) are connected to the fourth hydraulic actuator (32d), through the fourth (30d) and eighth (30h) hydraulic ducts.

With this arrangement, the two mobile crossbar components (20) that operate over the same actuator (32), can do it at different moments, giving time to, in each case, complete the passive cycle.

Undoubtedly, upon putting the present invention into practice, modifications may be introduced regarding certain construction details and form, without leaving the essential principles that are clearly explained in the claims below:

## Claims

1. INSTALLATION FOR POWER GENERATION BY MEANS OF VEHICULAR TRAFFIC, located at floor level of a vehicle traffic lane, that includes;
• In said floor, mobile components that, due to the own weight of the vehicles crossing it, are reversible movable from their usually emerging position,
• Means for the generation of electrical energy, that are propelled by the movement of said mobile components,
**characterized** because:
• it includes, at least, a generator of electrical energy module.
• said generator module includes, at least, a set of mobile crossbar components mounted over both sets of hydraulic cylinders, an hydraulic circuit, a linear hydraulic actuator, a movement transformer mechanism from straight swinging movement into a oneway rotating movement, and a generator of electrical energy
• said mobile crossbar components form a compound floor wherein each crossbar compound equipped with the automatic repositioning means, is the propeller means of its respective sets of hydraulic cylinders,
• said hydraulic cylinders are connected to the linear hydraulic actuator through the hydraulic circuit and
• said linear hydraulic actuator, through the movement transformer mechanism, propels the rotation movement of the electrical generator.

2. INSTALLATION FOR POWER GENERATION BY MEANS OF VEHICULAR TRAFFIC, according to claim 1, **characterized** because it includes a plurality of generators of electrical energy modules.

3. INSTALLATION FOR POWER GENERATION BY MEANS OF VEHICULAR TRAFFIC, according to claim 1 **characterized** because the mobile crossbar components are long-shaped elements arranged in such a manner that they cross the vehicles traffic lane.

4. INSTALLATION FOR POWER GENERATION BY MEANS OF VEHICULAR TRAFFIC, according to claim 1, **characterized** because the automatic repositioning means include elastically yielding means, under which influence each mobile crossbar component, actuated by the passage of a vehicle, describes a career between its normally emerging position and the descending position of actuation of the respective set of hydraulic cylinders.

5. INSTALLATION FOR POWER GENERATION BY MEANS OF VEHICULAR TRAFFIC, according to claim 1, **characterized** because the actuation means of each set of hydraulic cylinders is formed by a same mobile crossbar component and, preferably, because each set of hydraulic cylinders includes an alignment of hydraulic cylinders which actuation means is a same mobile crossbar component.

6. INSTALLATION FOR POWER GENERATION BY MEANS OF VEHICULAR TRAFFIC, according to claim 1, **characterized** because each set of hydraulic cylinders is connected to an entry of a linear hydraulic actuator through the hydraulic circuit.

7. INSTALLATION FOR POWER GENERATION BY MEANS OF VEHICULAR TRAFFIC, according to claim 1, **characterized** because each linear hydraulic actuator has, at least, one entry connected to a set of hydraulic cylinders and, preferably, because each linear hydraulic actuator has entries connected to both sets of hydraulic cylinders.

8. INSTALLATION FOR POWER GENERATION BY MEANS OF VEHICULAR TRAFFIC, according to claim 1, **characterized** because the mobile crossbar components, which respective sets of hydraulic cylinders are connected to a same linear hydraulic actuator, are arranged in such a manner that their operation is asynchronous.

9. INSTALLATION FOR POWER GENERATION BY MEANS OF VEHICULAR TRAFFIC, according to claim 1, **characterized** because the linear hydraulic actuator includes a linear gear of rack that works with a swinging movement and is connected to the movement transformer mechanism.

10. INSTALLATION FOR POWER GENERATION BY MEANS OF VEHICULAR TRAFFIC, according to claim 9, **characterized** because the linear gear of rack includes a slide rail.

11. INSTALLATION FOR POWER GENERATION BY MEANS OF VEHICULAR TRAFFIC, according to claim 9, **characterized** because the linear gear of rack moves with an active cycle, wherein it acts under the influence of the hydraulic cylinders and with a passive cycle, wherein it acts under the influence of a spring motor mechanism that is charged during said active cycle.

12. INSTALLATION FOR POWER GENERATION BY MEANS OF VEHICULAR TRAFFIC, according to claims 8 and 11, **characterized** because the mobile crossbar components, which respective sets of hydraulic cylinders are connected to the same linear hydraulic actuator, are arranged separated from each other, in such a manner that their operation is asynchronous and is produced in active cycles different from the linear gear of rack corresponding to said actuator and, preferably, because the mobile crossbar components, which respective sets of hydraulic cylinders are connected to a same linear hydraulic actuator, are arranged interleaved with other mobile crossbar components connected to other linear hydraulic actuators, in such a manner that the operation of the mobile crossbar components is asynchronous and that each set of hydraulic cylinders acts after the passive cycle of the respective linear hydraulic actuator.

13. INSTALLATION FOR POWER GENERATION BY MEANS OF VEHICULAR TRAFFIC, according to claim 1, **characterized** because the movement transformer mechanism includes a ratchet type mechanism which output shaft rotates in only one sense.

14. INSTALLATION FOR POWER GENERATION BY MEANS OF VEHICULAR TRAFFIC, according to claim 1 **characterized** because the rotating movement of the electrical generator is propelled by the linear hydraulic actuator through the movement transformer mechanism and though a spring motor mechanism, in such a manner that said spring motor mechanism, on the one hand, accumulates mechanical energy transmitted by said transformer mechanism while, on the other hand, it releases said energy propelling the electrical generator.

15. INSTALLATION FOR POWER GENERATION BY MEANS OF VEHICULAR TRAFFIC, according to claims 13 and 14, **characterized** because the spring motor mechanism works linked to the movement transformer mechanism.

16. INSTALLATION FOR POWER GENERATION BY MEANS OF VEHICULAR TRAFFIC, according to claim 1, characterized because the electrical generators are connected to, at least, one service board with connection means to, at least,one load network or circuit.

17. INSTALLATION FOR POWER GENERATION BY MEANS OF VEHICULAR TRAFFIC, according to claim 1, **characterized** because the hydraulic circuit is of the oleo-hydraulic type.

18. INSTALLATION FOR POWER GENERATION BY MEANS OF VEHICULAR TRAFFIC, according to claim 1, **characterized** because the electrical energy generator is an alternator that works in both directions of rotation.

19. INSTALLATION FOR POWER GENERATION BY MEANS OF VEHICULAR TRAFFIC, according to claims 1 and 14, **characterized** because the electrical energy generator is propelled by a spring motor mechanism through a reducer mechanism of mechanic transmission.

20. INSTALLATION FOR POWER GENERATION BY MEANS OF VEHICULAR TRAFFIC, according to claim 1, **characterized** because the compound floor includes an open fix structure, through which cross passages, the ascending and descending movements of the mobile crossbar components take place, that, together with the fix structure, form the compound floor prepared for the circulation of vehicles and, preferably, because the fix structure includes a frame that, provided with the mounting means at superficial level of the road, includes a plurality of cross passages separated by crossbars that form the fix part of the compound floor.

21. INSTALLATION FOR POWER GENERATION BY MEANS OF VEHICULAR TRAFFIC, according to claim 1, **characterized** because it is prepared to form an ascent and descent of passengers station for transport vehicles, wherein the width of the mobile crossbar components is such that a plurality of said mobile crossbar components can be fitted between the front axle and the rear axle of said vehicles, in such a manner that their arrangement one after the other before the wheels of said vehicles, contributes to the braking.
